# EUROPÄISCHE PATENTSCHRIFT

(11) **EP 2 156 248 B1**
(45) Veröffentlichungstag und Bekanntmachung des Hinweises auf die Patenterteilung: **13.04.2011**
(21) Anmeldenummer: 08759861.1
(22) Anmeldetag: 21.05.2008
(51) Int. Cl.: G03H 1/22, G03H 1/02

(54) **HOLOGRAPHISCHES REKONSTRUKTIONSSYSTEM MIT EINER OPTISCHEN WELLENNACHFÜHRUNG**
HOLOGRAPHIC RECONSTRUCTION SYSTEM WITH AN OPTICAL WAVETRACKING
SYSTÈME DE RECONSTRUCTION HOLOGRAPHIQUE À ASSERVISSEMENT OPTIQUE DES ONDES

(30) Priorität: 21.05.2007 DE 102007024237
(43) Veröffentlichungstag der Anmeldung: 24.02.2010
(73) Patentinhaber: SeeReal Technologies S.A., 5365 Munsbach (LU)
(72) Erfinder: KROLL, Bo, London W148 AA (GB); SCHWERDTNER, Armin, 01279 Dresden (DE); FÜTTERER, Gerald, 01277 Dresden (DE); REICHELT, Stephan, 01279 Dresden (DE); LEISTER, Norbert, 01279 Dresden (DE)
(74) Vertreter: Bradl, Joachim
(86) Internationale Anmeldenummer: PCT/EP2008/056259
(87) Internationale Veröffentlichungsnummer: WO 2008/142108

(56) Entgegenhaltungen:
- WO-A-2004/075526
- WO-A-2006/119920
- NEIL R. SMITH ET AL.: "Agile wide-angle beam steering with electrowetting microprisms" OPTICS EXPRESS, Bd. 14, Nr. 14, 10. Juli 2006 (2006-07-10), XP002497446

## Beschreibung

### Technisches Gebiet

Die Erfindung betrifft ein holographisches Rekonstruktionssystem zum dreidimensionalen Rekonstruieren einer Szene mit räumlichen Lichtmodulationsmitteln, welche eine holographische Kodierung tragen und Beleuchtungsmittel zum Beleuchten der Lichtmodulationsmittel.

Die vorliegende Erfindung betrifft vorrangig eine Echtzeit- oder echtzeitnahe Darstellung von bewegten Szenen mittels einer Folge von Videohologrammen. Ein Hologrammprozessor kalkuliert Videohologramme und kodiert diese auf einer Zellenstruktur von räumlichen Lichtmodulationsmitteln, welche beim Beleuchten mit interferenzfähigem Licht mindestens ein propagierendes Lichtwellenfeld mit holographischer Information räumlich modulieren. Das modulierte Lichtwellenfeld rekonstruiert durch Interferenz der gebeugten Lichtwellen die Szene und breitet sich so zu einer Augenposition aus, dass ein oder mehrere Betrachter die rekonstruierten Objektlichtpunkte als dreidimensionale Rekonstruktion einer Szene wahrnehmen. Das heißt, die rekonstruierten Objektlichtpunkte geben vor den Augenpositionen die optische Erscheinung der Szene dreidimensional wieder.

### Technischer Hintergrund der Erfindung

Im Gegensatz zu einer stereoskopischen Darstellung realisiert eine holographische Rekonstruktion eine Objektsubstitution und die von der Stereoskopie bekannten Probleme wie Ermüdung oder Augen- und Kopfschmerzen entfallen, da prinzipiell kein Unterschied beim Betrachten von holographisch rekonstruierten Szenen und natürlichen Szenen besteht. Die Augen eines Betrachters können im Zeit- oder Raummultiplex von verschieden Videohologrammen bedient werden, die sich in der Parallaxe unterscheiden.

Als Lichtmodulationsmittel eignen sich beispielsweise hochauflösende flache Lichtmodulatoren mit mehreren Millionen Modulatorzellen gut, die in Bildschirmen für Video- und TV-Geräten oder Projektoren eingesetzt werden. Beispiele für geeignete Lichtmodulationsmittel sind so genannte Liquid Crystal on Silicon-Modulatoren bei denen optische Modulatorelemente mit elektronischen Schaltungen auf einem Substrat bzw. Chip angeordnet sind, transmissive LCD oder elektro-mechanisch bewegbare Mikro-Spiegelsysteme, wie beispielsweise Micro Electro Mechanical Systems (MEMS), welche eine Kombination aus mechanischen Elementen, Aktoren und elektronischen Schaltungen auf einem Substrat bzw. Chip enthalten.

Ein Lichtmodulationsmittel erreicht umso größere Lichtbeugungswinkel, je kleiner der Abstand der Zell-Mittelpunkte der Modulatorzellen, der so genannte Zell-Pitch, ausgeführt ist.

Aus der internationalen Veröffentlichung WO 2004/044659 mit der Bezeichnung "Videohologramm und Einrichtung zur Rekonstruktion von Videohologrammen" ist ein Rekonstruktionssystem bekannt, welches zur räumlichen Lichtmodulation einen für die Fernseh- und Videobildwiedergabe genutzten Flüssigkristall-Display Schirm LCD mit konventioneller Auflösung verwendet. Das Rekonstruktionssystem enthält Fokussiermittel zwischen den Beleuchtungsmitteln und dem Lichtmodulator und ermöglicht mit einem konventionellen Flüssigkristall-Display, welches eine für Videoholographie relativ geringe Modulatorauflösung aufweist, eine Szene holographisch zu rekonstruieren. Die rekonstruierte Szene ist in einem Rekonstruktionsraum durch einen Sichtbarkeitsbereich, der an einer Augenposition eines Betrachters liegt, mit hoher Raumtiefe bei guter Auflösung sichtbar. Zum holographischen Rekonstruieren ist ein Sichtwinkel nutzbar, den der Querschnitt des Flüssigkristall-Display Schirms bestimmt.

Bei einer holographischen Anwendung eines Lichtmodulators, welcher für eine konventionelle Bildwiedergabe entworfen wurde, ist nachteilig, dass der Lichtmodulator auf Grund eines üblichen Abstandes der Modulatorzellen von etwa 200 µm einen für die Holographie kleinen Beugungswinkel aufweist. Dadurch ist ein gleichzeitiges Betrachten einer Rekonstruktion mit beiden Augen über einen einzigen Sichtbarkeitsbereich unmöglich. Für einen derartig durch die Auflösung begrenzten kleinen Sichtbarkeitsbereich sieht das bekannte Rekonstruktionssystem vor, für jedes Betrachterauge eines Betrachters sequentiell je einen separaten Sichtbarkeitsbereich zu generieren. Das heißt, das System leitet innerhalb der Dauer eines Videohologramms abwechseln für einen Bruchteil einer Dauer eines Videohologramms je ein mit Hologramminformation moduliertes Wellenfeld zu den Betrachteraugen. Dieses stellt hohe Anforderungen an die Arbeitsgeschwindigkeiten der Lichtmodulationsmittel.

Das Rekonstruktionssystem gemäß der Veröffentlichung WO 2004/044659 offenbart deshalb zusätzlich eine Möglichkeit zum Ausrichten und zum Nachführen der Position von mehreren Sichtbarkeitsbereichen. Insbesondere realisiert das Rekonstruktionssystem einen mechanischen oder elektronischen Versatz der Lichtquellen lateral zur optischen Systemachse, durch bewegliche Spiegel oder durch mehrere verschieden positionierbare Lichtquellen, um die Lichtquellenbilder, welche die Sichtbarkeitsbereiche zum Wahrnehmen der Rekonstruktion bilden, zu verschieben. Bewegt sich der Betrachter, werden die Lichtquellen so im Raum umpositioniert, dass die Sichtbarkeitsbereiche den Augen des Betrachters folgen.

Nachteilig ist, dass sich bei einem großen Nachführbereich erhebliche Aberrationen, welche die Fokussiermittel beim Lichtdurchgang bewirken, störend auf die Rekonstruktion der räumlichen Szene auswirken. Die Aberrationen entstehen dadurch, dass je nach Augenposition das Licht die Fokussiermittel zum Rekonstruieren unter verschiedenen Winkeln durchläuft. Da Welleninterferenzen von gebeugten Teillichtwellen die Objektlichtpunkte rekonstruieren, können derartige Aberrationen in Folge von Phasen und Laufzeitfehlern auch solche Wiedergabefehler bewirken, welche von herkömmlichen Video-Bildwiedergaben unbekannt sind. Beispielsweise können andere Teillichtwellen als beim Kalkulieren des Hologramms entsprechend dem holographischen Quellsignal vorgesehen interferieren und deplazierte oder gegenüber dem Original zusätzliche Objektlichtpunkte regenerieren.

In der internationalen Veröffentlichung WO 2006/119920 mit der Bezeichnung: "Device for holographic reconstruction of three-dimensional scenes" offenbart der Anmelder ebenfalls ein Gerät, welches zum Betrachten der Rekonstruktion wenigsten einen gegenüber der Modulatorfläche des Lichtmodulators geringen Sichtbarkeitsbereich an einer Augenposition nutzt. Bei diesem System beleuchtet ein Feld von interferenzfähigen Lichtquellen, die als Matrix angeordnet sind, die Modulatorfläche und die Fokussiermittel enthalten eine Vielzahl von Abbildungselementen, wie Sammellinsen, welche als flaches Fokussiermittelfeld mechanisch mit einander verbunden sind. Jedem Abbildungselement des Fokussiermittelfeldes ist mindestens eine interferenzfähige Lichtquelle zugeordnet, so dass ein Bündel von Beleuchtungseinheiten entsteht, die alle gemeinsam die Modulatorfläche beleuchten, wobei jede Beleuchtungseinheit nur einen Teilbereich der Modulatorfläche durchdringt. Die interferenzfähigen Lichtquellen in den Beleuchtungseinheiten sind so positioniert, dass die Abbildungselemente des Fokussiermittelfeldes ihre zugeordnete Lichtquelle an einer Augenposition abbilden. Anders ausgedrückt, jede Beleuchtungseinheit sendet eine Teillichtwelle durch einen Teilbereich der Modulatorfläche und nach separater Modulation durch die verschiedenen Teilbereiche überlagern sich die Teillichtwellen zu einem gemeinsamen Sichtbarkeitsbereich.

Zum Ausrichten und Nachführen der Position des Sichtbarkeitsbereichs auf wechselnde Augenpositionen sind gemäß einer Fortbildung der bekannten Lösung die Lichtquellen als flächenförmige Hintergrund-Beleuchtung ausgeführt und eine zusätzliche, schaltbare Modulatormatrix mit lichtdurchlässig schaltbaren Modulatorzellen, beispielsweise ein so genanntes LCD-Shutter Array, öffnet abhängig von der aktuellen Augenposition, die ein Positionserfassungssystem ermittelt, für jedes Abbildungselement des Fokussiermittelfeldes einen punktförmigen Lichtaustritt für das interferenzfähige Licht, welches die Abbildungselemente zur Augenposition fokussieren. Dabei entsteht ein Muster von lichtdurchlässig geschalteten Modulatorzellen. Bei lateralen Änderungen der Augenposition wird die Position des Sichtbarkeitsbereiches angepasst, in dem eine Systemsteuerung das Muster der lichtdurchlässig geschalteten Modulatorzellen entsprechend lateral verschiebt. Bei axialen Änderungen der Augenposition verändert die Systemsteuerung die Abstände der lichtdurchlässig geschalteten Modulatorzellen im Muster. Die genannte Veröffentlichung offenbart auch die Verwendung eines schaltbaren Lichtquellenfeldes mit diskret aktivierbaren Punktlichtquellen, um das beschriebene Ausrichten und Nachführen des Lichtwellenfeldes zu realisieren.

Es hat sich jedoch gezeigt, dass das Ausrichten und Nachführen der Position des Sichtbarkeitsbereichs durch Anpassen der Ausbreitung des Lichtwellenfeldes nach der beschriebenen Lösung verschiedene Nachteile hat. Zum einen kann bei Verwenden einer zusätzlichen schaltbaren Modulatormatrix immer nur ein geringer Bruchteil der Lichtenergie zum Rekonstruieren beitragen, während die zusätzliche, schaltbare Modulatormatrix den überwiegenden Anteil des Lichtes des Lichtquellenfeldes absorbiert.

Andererseits wäre entweder ein diskret schaltbares Lichtquellenfeld oder eine zusätzliche schaltbare Modulatormatrix erforderlich, welche eine um ein Vielfaches höhere Auflösung besitzen muss als der Lichtmodulator. Ein derartiges Lichtquellenfeld oder eine schaltbare Modulatormatrix sind extrem aufwändig zu realisieren.

Beide Lösungen haben außerdem noch einen weiteren schwerwiegenden Nachteil, der darin besteht, dass das kohärente Licht der Hintergrund-Beleuchtung die Abbildungselemente des Fokussiermittelfeldes in verschieden geneigten Durchgangswinkeln durchquert. Die Neigung der Durchgangswinkel hängt vom Betrachterstandort ab und führt je nach aktueller Augenposition zu erheblichen Aberrationen, welche in Folge ihrer Dynamik extrem schwer zu kompensieren sind. Diese Aberrationen sind außerdem zwischen den Teillichtwellen verschieden, da die Ausbreitungsrichtungen der Teillichtwellen zur aktuellen Augenposition ebenfalls von einander abweichen.

Außer den genannten Lösungen beschreibt der Anmelder in der internationalen Veröffentlichung WO2006/119760 mit dem Titel: "Projektionsvorrichtung und Verfahren zur holographischen Rekonstruktion von Szenen" ein holographisches Projektionssystem, das für den Lichtmodulator ein Mikro-Display mit einer Diagonalen von wenigen Zentimetern Größe nutzt. Die Vorrichtung generiert ähnlich wie die zuvor beschriebenen Lösungen einen Sichtbarkeitsbereich für eine Augenposition. Im Gegensatz zu den vorgenannten Lösungen, bei denen der Lichtmodulator für das modulierte Wellenfeld den optischen Systemausgang bildet und mit seinem Querschnitt für die Rekonstruktion den maximalen Sichtwinkel definiert, realisiert diese Lösung eine Projektionsvorrichtung. Bei dieser Vorrichtung definiert ein fokussierender Wiedergabeschirm den maximalen Sichtwinkel und zusätzlich optische Vergrößerungsmittel weiten das mit holographischer Information modulierten Wellenfeld auf die Ausdehnung des Wiedergabeschirms auf. Ein erstes Abbildungsmittel bildet ein auf dem Lichtmodulator kodiertes Videohologramm vergrößert auf einem fokussierenden Wiedergabeschirm ab und der Wiedergabeschirm bildet ein Raumfrequenzspektrum des Videohologramms an einer aktuellen Augenposition ab. Die Veröffentlichung offenbart außerdem im Innern der Vorrichtung wenigstens ein steuerbares Ablenkelement zum Nachführen des aktuellen Betrachterfensters entsprechend der Augenposition des Betrachters. Derartige Ablenkelemente können mechanische, elektrische oder optische Elemente sein. Das Ablenkelement kann beispielsweise in der Ebene des ersten Abbildungsmittels als ein steuerbares optisches Element angeordnet sein, das wie ein Prisma das modulierte Wellenfeld umlenkt. Es ist aber auch möglich, das Ablenkelement in der Nähe des Wiedergabeschirms anzuordnen. Dieses Ablenkelement realisiert dann die Wirkung eines kontinuierlich einstellbaren Prismas und optional zusätzlich die Wirkung einer Linse. Dadurch wird ein laterales und optional ein axiales Nachführen des Betrachterfensters erzielt. Da jedoch ein Ablenkelement nahe des Wiedergabeschirms die Aufgabe hat, das bereits modulierte und vergrößerte Wellenfeld umzulenken, ohne die Phasenstruktur und die eingestellten Interferenzbedingungen zum Rekonstruieren der Szene zu zerstören, muss ein Modulatorzellenfeld, das diese Aufgabe realisieren soll, zusätzliche Merkmale erfüllen, die der Veröffentlichung nicht zu entnehmen sind.

Alle oben beschriebenen Rekonstruktionssysteme nutzen Lichtmodulationsmittel mit einer diskreten Zellenstruktur und mit einer für die Holographie vergleichsweise geringen Zellenauflösung. Die diskrete Zellenstruktur führt einerseits bekanntlich dazu, dass sich die holographische Rekonstruktion in anderen Beugungsordnungen eines Beugungsintervalls periodisch wiederholt, so dass Sichtstörungen auftreten können. Andererseits führt der erwähnte verfügbare Zellabstand der Modulatorzellen zu einem vergleichsweise geringen Beugungswinkel, so dass in der Praxis für eine störungsfreie Sichtbarkeit der rekonstruierten Szene eine Beugungsordnung mit einem Querschnitt von einigen Millimetern bis zu wenigen Zentimetern zur Verfügung steht. Deshalb ist es sinnvoll, die Systemsteuerung einer derartigen Vorrichtung mit einem Positionserkennungs- und Nachführmodul zu kombinieren. Dieses richtet mit Wellennachführmitteln die modulierten Lichtwellen auf die aktuelle Augenposition, stellt die Position des Sichtbarkeitsbereichs abhängig von der Augenposition ein und führt das Lichtwellenfeld bei jedem Wechsel der Augenposition nach.

Außerdem wird entweder ein mechanisches Positionieren der Lichtquellen oder im Fall eines elektronischen Steuerns der Lichtquellenposition eine hohe räumliche Auflösung des Lichtquellenfeldes benötigt. Dann muss das Lichtquellenfeld für jedes Abbildungselement des Abbildungsfeldes eine Vielzahl von Punktlichtquellen enthalten.

Aus der internationalen Veröffentlichung WO 2004/099847 mit dem Titel: "Electrowetting Cell" ist eine steuerbare elektrooptische Zelle eine sogenannte Elektro-Benetzungszelle bekannt. Diese Zellen nutzen den Kapillareffekt und eine Elektrobenetzung, um mit elektrostatischem Potential die Oberflächenspannung von Flüssigkeiten zu verändern und damit das optische Brechungsverhalten zu steuern. Eine Elektrobenetzungszelle enthält im Prinzip eine Kapazität, die zwischen den Elektroden mit einer hydrophoben Flüssigkeit, wie Öl und Wasser gefüllt ist, wobei eine der Elektroden hydrophob beschichtet ist. Ohne elektrisches Feld legt sich das Öl als Film über die beschichtete Elektrode, mit einem elektrischem Feld verdrängt das Wasser den Ölfilm, da das anliegende Feld die Polarisation der Dipole in der Wasseroberfläche aufhebt. Die Zelle kann elektronisch einstellbare optische Linsen und Prismenelemente von Größenordnungen unterhalb eines Quadratmillimeters bis herunter von Ausdehnungen von wenigen Mikrometern realisieren.

Ein autostereoskopisches Bildwiedergabegerät gemäß der internationalen Veröffentlichung WO 2004/075526 mit dem Titel "Auto stereoscopic Display" sendet Bildlichtpunkte ohne Nachführeinrichtung horizontal in eine Vielzahl von Richtungen. Das Bildwiedergabegerät weist eine Hintergrundbeleuchtung auf, welche kollimiertes Licht über die Bildlichtpunkte eines Bildanzeigegerätes in Richtung eines Feldes mit optischen Ablenkelementen mit dynamisch einstellbaren Ablenkverhalten emittiert. Die optischen Elemente sind insbesondere Elektro-Benetzungszellen, welche als einstellbare Linsen oder Mikroprismen betrieben werden und eine dynamisch einstellbare Strahlsteuerung realisieren. Um ein Nachführen der Bilddarstellung auf die aktuellen Augenpositionen von Betrachtern zu vermeiden, verändert eine Systemsteuerung mit dem einstellbaren Feld von optischen Ablenkelementen während jeder Periode des Videobildes sowohl vielfach den Austrittswinkel des Lichtes und ändert auch für das Bildanzeigegerät vielfach den Bildinhalt. Dabei werden innerhalb jeder Videobildperiode bis zu hundert horizontal eng nebeneinander liegende Abstrahlrichtungen in Form von Bildsektoren in einer Kombination aus Raummultiplex und Zeitmultiplex bedient, so dass ohne Nachführen jedes Betrachterauge in der Parallaxe verschiedene Videobilder sieht. Die optischen Ablenkelemente schwenken dabei die vom Bildwiedergabegerät zeitlich verschieden modulierten Strahlen über die Vielzahl der dicht beieinander liegenden Bildsektoren. Die Veröffentlichung offenbart keine technischen Mittel, wie die Systemsteuerung mit dem Feld der optischen Ablenkelemente ein interferenzfähiges moduliertes Wellenfeld umlenken kann.

Im Gegensatz zum Gegenstand der vorliegenden Erfindung betrifft die internationale Veröffentlichung WO 2004/075526 ein autostereoskopisches Bildwiedergabegerät das keine Objektlichtpunkte in einem Betrachterraum als drei-dimensionale Anordnung holographisch rekonstruiert. An Stelle der rekonstruierten Objektlichtpunkte zeigt ein autostereoskopisches Bildwiedergabegerät in der Modulatorebene zweidimensionale Bilder in der Form von leuchtenden Bildpunkten an, welche für beide Betrachteraugen verschiedene Bildinformation tragen. Das System nutzt weder Lichtbeugung noch Lichtinterferenz. Die dynamisch einstellbare Strahlsteuerung ist für ein einfaches Ablenken von Strahlenbündeln mit inkohärentem Licht konzipiert und stellt keinerlei Anforderungen an die Interferenzbedingungen der abgelenkten Lichtstrahlen untereinander. Insbesondere das Eindringen von Licht parasitärer Beugungsordnungen können die nahe bei einander liegenden Strahlenbündel nicht vermeiden. Außerdem würde unlineares Transmissionsverhalten in den Randzonen der Benetzungszellen die Ausbreitung der interferenzfähigen modulierten Lichtwellen beeinflussen und das Interferenzverhalten des Rekonstruktionssystems und damit der Güte der Rekonstruktion empfindlich stören.

Die Veröffentlichung offenbart keine technischen Mittel, wie die Systemsteuerung mit dem Feld der optischen Ablenkelemente ein interferenzfähiges moduliertes Wellenfeld umlenken kann und der Einfluss von parasitären Beugungsordnungen zu verhindern ist.

### Zusammenfassung der Erfindung

Die Aufgabe der vorliegenden Erfindung besteht darin, ein holographisches Rekonstruktionssystem mit einer Wellennachführung für ein propagierendes Wellenfeld zu schaffen, welches den Einsatz eines schaltbaren Modulatorzellenfeldes oder eines schaltbaren Lichtquellenfeldes mit diskret aktivierbaren Punktlichtquellen zum Ausrichten des Wellenfeldes und deren geringe Lichteffizienz vermeidet. Sowohl die Anzahl der optischen Komponenten, durch die das Licht läuft, als auch die Anforderungen an die optischen Komponenten des Systems sollen minimiert werden, so dass die Struktur der modulierten Lichtwellen unabhängig von der aktuellen Augenposition eines Betrachter weitestgehend konstant bleibt und der Lichtweg jeder modulierten Lichtwelle möglichst geringe Laufzeit und Phasenfehlern aufweist, um eine Korrektur der optischen Wellenausbreitung zu ermöglichen. Außerdem ist das optische Übertragungsverhalten der optischen Komponenten der Wellennachführung an die strengen Bedingungen der Interferenzfähigkeit des Wellenfeldes anzupassen, so dass die Objektlichtpunkte einer dreidimensionalen Szene frei von Fehlern in der lokalen Position innerhalb der Struktur der Szene und mit möglichst originalgetreuen Lichtwerten rekonstruiert werden.

Die Erfindung geht von einem holographischen Rekonstruktionssystem gemäß der internationalen Veröffentlichung WO 2006/119920 aus, welches zum Betrachten der Rekonstruktion wenigsten einen gegenüber der Modulatorfläche der Lichtmodulatormittel geringen Sichtbarkeitsbereich an einer Augenposition nutzt und zum dreidimensionalen Rekonstruieren von Objektlichtpunkten einer Szene räumliche Lichtmodulationsmittel mit Modulatorzellen enthält, welche interferenzfähiges Licht eines Lichtquellenfeld mit wenigstens einem Videohologramm modulieren. Das Rekonstruktionssystem enthält außerdem optische Fokussiermittel, welche das Licht des Lichtquellenfeldes in einer Fokussierebene abbilden. Eine Systemsteuerung mit einem Hologrammprozessor zum Neuberechnen von Videoholgrammen und einem Augenfinder richtet die modulierten Lichtwellen mit den rekonstruierten Objektlichtpunkten auf mindestens eine aktuelle Augenposition von Betrachteraugen, die dem aktuellen Hologramminhalt entspricht, aus und führt sie bei Positionswechsel der aktuellen Augenposition nach. Da das holographische Rekonstruktionssystem gemäß der vorliegenden Patentanmeldung für die Augen von Betrachtern innerhalb der Dauer eines einzelnen Videohologramms einer Video-Sequenz sequentiell Wellenfelder mit parallaktisch verschiedenen Hologramminhalten bereit stellt, ist in der vorliegenden Patentanmeldung die Augenposition als die aktuelle Augenposition zu verstehen, für die die Lichtmodulationsmittel aktuell kodiert sind.

Die Lichtmodulationsmittel modulieren das Lichtwellenfeld so, dass dieses unabhängig vom Ausrichten und Nachführen der Lichtwellen die Objektlichtpunkte vor der aktuellen Augenposition rekonstruiert.

Bei dem vorliegenden System beleuchtet ein Lichtquellenfeld mit interferenzfähigen Lichtquellen, die als Matrix angeordnet sind, die Lichtmodulationsmittel und die Fokussiermittel enthalten eine Vielzahl von Abbildungselementen, wie Sammellinsen, welche als flaches Fokussiermittelfeld mechanisch mit einander verbunden sind. Jedem Abbildungselement des Fokussiermittelfeldes ist mindestens eine interferenzfähige Lichtquelle zugeordnet, so dass ein Bündel von Beleuchtungseinheiten entsteht, die alle gemeinsam die Lichtmodulationsmittel beleuchten, wobei jede Beleuchtungseinheit nur einen Teilbereich der Fläche der Lichtmodulationsmittel durchdringt.

Im Gegensatz zu der aus der Veröffentlichung WO 2006/119920 bekannten Lösung sind in der Lösung gemäß der vorliegenden Patentanmeldung die Lichtquellen in den Beleuchtungseinheiten so positioniert, dass das interferenzfähige Licht die Abbildungselemente des Fokussiermittelfeldes im Wesentlichen parallel zur optischen Achse des Abbildungselementes passiert.

Gemäß der Erfindung enthält das Rekonstruktionssystem am Systemausgang für das modulierte Wellenfeld, vorzugsweise im Lichtweg hinter den Lichtmodulationsmitteln, elektro-optischen Ablenkmittel, welche mindestens ein Ablenkmittelfeld mit in ihrer Lichtaustrittsrichtung einstellbaren optischen Zellen aufweist.

Vorteilhaft weisen die einstellbaren optischen Zellen des Ablenkmittelfeldes die gleiche Matnxstruktur auf, wie die Struktur des Fokussiermitteffeldes und das Lichtquellenfeld, so dass jeder Lichtquelle und jedem Fokussierelement mindestens eine einstellbare optische Zelle zugeordnet ist.

Diese Maßnahme gewährleistet, dass das Licht des Lichtquellenfeldes die Abbildungselemente im Fokussiermittelfeld und die einstellbaren optischen Zellen parallel zur gemeinsamen optischen Achse und parallel zur optischen Achse der Lichtmodulationsmittel passiert. Dieses verhindert optische Aberrationen und teilweise Abschattungen des propagierenden Wellenfeldes.

Gemäß einem weiteren Merkmal der Erfindung stellt die Systemsteuerung die elektro-optischen Ablenkmittel des Ablenkmittelfeldes mit Hilfe von Positionssignalen, die der Augenfinder ermittelt, alternierend auf eine durch den Inhalt des aktuellen Videohologramms bestimmte aktuelle Augenposition ein, um das fokussierte und modulierte Lichtwellenfeld alternierend auf eine aktuelle Augenposition von mindestens einem Betrachter auszurichten.

Zum Ausgleichen von Phasenfehlern und Erreichen eines kontinuierlichen Phasenverlaufs zwischen den Teillichtwellen benachbarter einstellbarer optischer Zellen des Ablenkmittelfeldes kalkuliert der Hologrammprozessor beim Kodieren der Modulatorzellen der Lichtmodulationsmittel entsprechende Wertkorrekturen abhängig von der aktuellen Augenposition ein.

Vorteilhaft ist das Ablenkmittelfeld so nahe wie möglich an den Lichtmodulationsmittel betrachterseitig angeordnet. Dieses ermöglicht, dass die rekonstruierte Szene für den Betrachter eine feste Position vor dem optischen Systemausgang aufweist.

Die elektro-optischen Ablenkmittel des Ablenkmittelfeldes realisieren beispielsweise eine steuerbare optische Prismenfunktion. Auf diese Weise kann das Rekonstruktionssystem innerhalb der Dauer eines Videohologramms von wenigen Millisekunden mehrfach die Ausbreitungsrichtung für das modulierte Wellenfeld zu verschiedenen Augenpositionen im Betrachterraum umschalten. Mit Hilfe des Augenfinders passt damit die Systemsteuerung die Ausbreitungsrichtung des propagierenden Wellenfeldes an eine sich ändernde Augenpositionen an. Zum Anpassen von axialen Positionsänderungen kann das Ablenkmittelfeld neben Prismenfunktion auch in Kombination eine Linsenfunktion realisieren. Dadurch kann sowohl der ausgangsseitige Fokus als auch die Richtung der Lichtwellen an die aktuelle Augenpositionen angepasst werden.

Von der Erzeugung bis zum Ablenkmittel weist der Lichtweg des interferenzfähigen Lichts einen von der Augenposition unabhängigen, statischen Verlauf auf. Durch optische Bauelemente hervorgerufene Aberrationen können somit entweder mit elektronischen Mitteln durch Korrekturwerte beim Kodieren oder durch bekannte optische Korrekturmittel optimal korrigiert werden.

Die Anordnung des Ablenkelements nahe der Austrittsöffnung des holographischen Systems ist besonders vorteilhaft, weil das gesamte Abbildungssystem von der Lichtquelle bis zum zweiten Abbildungsmittel statisch ist. Das heißt, der Strahlengang bis zu diesem Abbildungsmittel bleibt immer konstant. Dieses minimiert die Anforderungen an diesen Teil des optischen Systems, da die Apertur der Fokussiermittel minimal gehalten werden kann.

Diese Maßnahmen gemäß der Erfindung verringern erheblich die Anforderungen an die verwendeten Abbildungsmittel.

Außerdem kann der statische Teil des optischen Systems optimal in seinen Abbildungseigenschaften korrigiert werden. Darüber hinaus verschiebt sich die Abbildung der Lichtmodulationsmittel innerhalb des Rekonstruktionssystems nicht. Dadurch ist beispielsweise die Position von Abbildungen innerhalb des Systems unabhängig von der Betrachterposition.

In einer bevorzugten Ausgestaltung sind die steuerbaren Ablenkmittel mit den Fokussierungsmitteln kombiniert.

In einer vorteilhaften Ausgestaltung der Erfindung weisen die steuerbaren Ablenkmittel für jedes Fokussierelement im Fokussiermittel wenigstens eine Elektrobenetzungszelle auf.

Eine zweidimensionale, laterale Wellenachführung, also horizontal und vertikal zur optischen Achse, wird beispielsweise durch zwei im Lichtweg liegende Feldebenen mit Ablenkelementen realisiert, wobei die Ablenkwinkel der Ablenkelemente beider Feldebenen um 90 Grad zueinander gedreht werden. Diese kann aber auch mit Ablenkelementen erreicht werden, bei denen der Ablenkwinkel mehrdimensional einstellbar ist.

In einer vorteilhaften Ausgestaltung ist dabei jedes Ablenkelement des Feldes von Ablenkelementen einzeln steuerbar, um individuell den Ablenkwinkel der Lichtwellen zu beeinflussen.

In diesem Fall können insbesondere alle Lichtquellen im Lichtquellenfeld und alle Fokussierelemente in den optischen Fokussiermitteln starr und zentral zu jedem Fokussierelement angeordnet sein.

Um eine axiale Bewegung der Augenposition auszugleichen, können die Computermittel, welche das aktuelle Videohologramm kalkulieren, zusätzlich zur holographischen Information eine Linsenfunktion kodieren.

In einer weiteren Ausgestaltung weisen die optischen Ablenkmittel mechanisch verbundene, steuerbare optische Elemente auf, welche eine Linsenfunktion und eine Prismenfunktion vereinen. Ein Positionserfassungssystem steuert mit diesen optischen Elementen die Brennweite der Linsenfunktion, um den Sichtbarkeitsbereich axial zu positionieren und um die Wellenfront mit dem Sichtbarkeitsbereich lateral auf die Augenposition zu richten.

In noch einer weiteren Ausgestaltung der Erfindung weisen die optischen Ablenkmittel verbundene, steuerbare optische Elemente auf, welche sowohl eine Spiegelkomponente als auch eine Prismenkomponente aufweisen. Dabei wird bevorzugt, dass das Positionserfassungssystem durch Steuern der Brennweite der Spiegelkomponente ein axiales Nachführen und durch Steuern der Prismenkomponente ein laterales Nachführen der Lichtstrahlen entsprechend von Positionswechseln der Betrachteraugen ermöglicht.

In einer weiteren Ausgestaltung weisen die optischen Ablenkelemente verbundene optische Elemente auf, die eine feste Prismenkomponente und eine steuerbare Prismenkomponente vereinen.

Die feste Prismenkomponente kann die Ablenkung der Lichtstrahlen für eine mittlere Augenposition ermöglichen so dass die steuerbare Prismenkomponente kleinere Winkel und somit geringere Ansteuerspannungen benötigt.

Das Rekonstruktionssystem gemäß der Erfindung ist auch für kleine Sichtbarkeitsbereiche geeignet, bei denen getrennte, parallaktisch verschiedene Videohologramme sequentiell für jedes Betrachterauge eine Rekonstruktion bereitstellen. In diesem Fall schaltet die Systemsteuerung periodisch und synchron zum aktuell kodierten Videohologramm um.

Für eine farbige Rekonstruktion von Szenen können farbige Videohologramme sequentiell kodiert werden werden. Dann kann durch die Steuerung der Ablenkwinkel der Ablenkmittel eine gegebenenfalls auftretende Farbdispersion kompensiert werden. Beispielsweise können Prismenwinkel so eingestellt werden, dass sie jeweils für die aktuelle Farbe die gewünschte Ablenkung erzeugen.

Als eine weitere Ausgestaltung sind die optischen Ablenkmittel als achromatische Elemente gestaltet, so dass sie für mehrere Wellenlängen zur Rekonstruktion eines Farbhologramms den gleichen Ablenkwinkel erzeugen.

### Kurzbeschreibung der Zeichnungen

Die Erfindung soll im Folgenden anhand von Figuren näher beschriebenen werden.

Die Figuren zeigen im Einzelnen:
- FIG. 1: ein holographisches Rekonstruktionssystem gemäß der internationalen Veröffentlichung WO 2006/119920 mit einer gerichteten Beleuchtung für die Lichtmodulationsmittel, Lichtquellen und Fokussiermittel.
- FIG. 2: das holographische Rekonstruktionssystem nach FIG. 1, welches die modulierten Lichtwellen durch ein Verschieben der Positionen der Lichtquellen zu einer Augenposition führt.
- FIG.3: das holographische Rekonstruktionssystem nach FIG. 1, welches die Kodierung des Lichtmodulators SLM für einen einzigen Objektlichtpunkt OLP einer dreidimensionalen Szene darstellt.
- FIG. 4: ein holographisches Rekonstruktionssystem mit einem Ablenkmittelfeld gemäß der Erfindung, die einstellbare optische Zellen zum Ausrichten und Nachführen der modulierten Lichtwellenfront gemäß der Erfindung enthalten.
- FIG.5: ein holographisches Rekonstruktionssystem gemäß einer weiteren Ausführung der Erfindung, bei dem eine Systemsteuerung mit den einstellbaren optischen Zellen die modulierte Lichtwellenfront ausrichtet und nachführt, ohne dass die interferenzfähigen Teillichtwellen vorher gerichtet wurden.

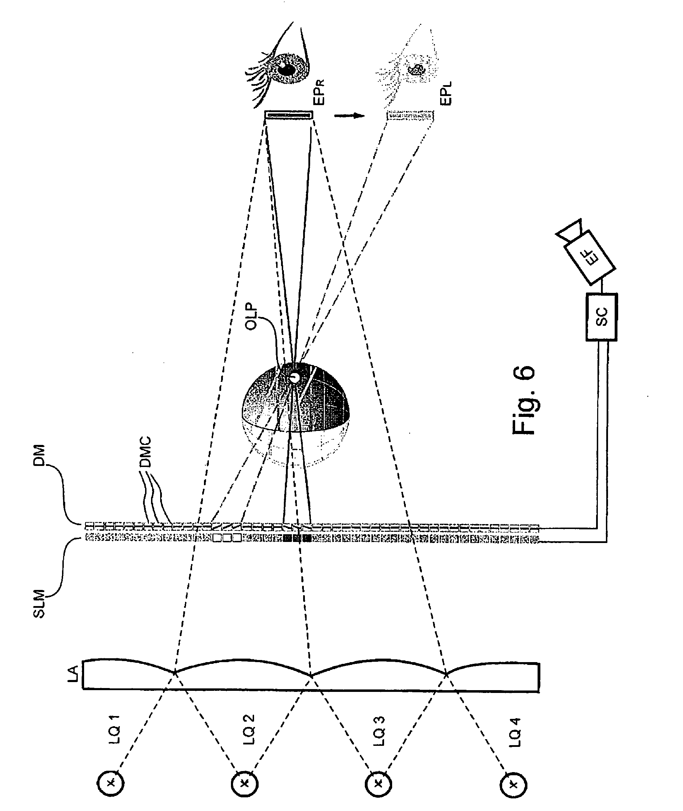

- FIG.6: eine weitere Ausführung des holographischen Rekonstruktionssystems gemäß der Erfindung.

### Detaillierte Beschreibung der Erfindung

In den nachfolgenden Ausführungsbeispielen kodiert eine elektronische Systemsteuerung SC Sequenzen von Videohologrammen direkt auf einem großflächigen Flachbildschirm, welcher von der Video- und Fernsehtechnik bekannt ist, beispielsweise ein LCD-Paneel, das einem Betrachter direkt als Wiedergabeschirm dient, und im Interesse eines großen Sichtwinkels beim Betrachten der Rekonstruktion möglichst großflächig ist.

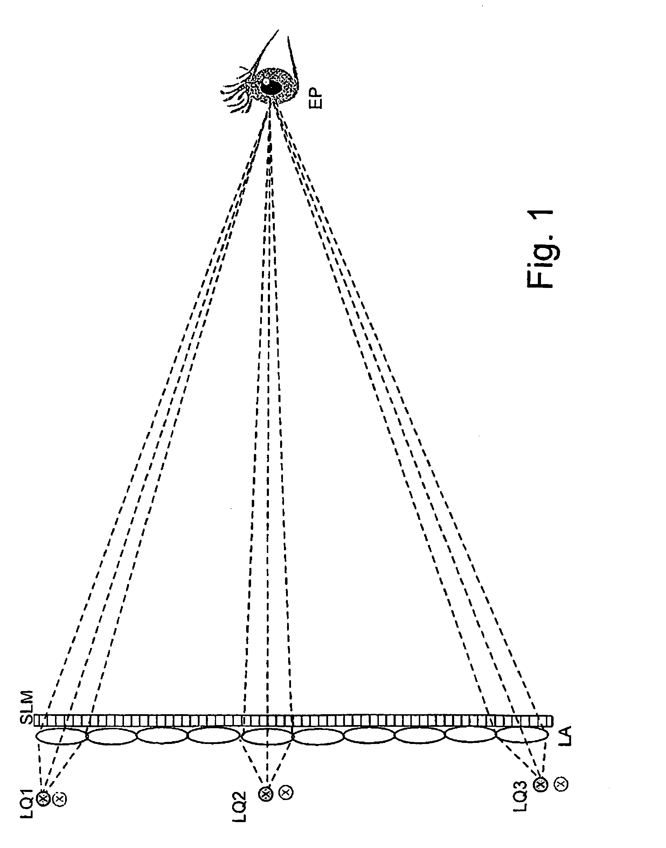

FIG. 1 zeigt ein holographisches Rekonstruktionssystem gemäß der bekannten Ausgangslösung mit ausgewählten punktförmigen, interferenzfähigen Lichtquellen LQ1, LQ2 und LQ3 die Bestandteil eines Lichtquellenfeldes sind. Das Lichtquellenfeld enthält für jedes Abbildungselement eines Fokussiermittelfeldes LA eine zugeordnete interferenzfähige Lichtquelle LQ1, LQ2 oder LQ3, welche eine punktförmige, interferenzfähige Lichtquelle darstellt. Je ein Abbildungselement des Fokussiermittelfeldes LA und eine zugeordnete Lichtquelle bilden eine Beleuchtungseinheit zum Beleuchten der Modulatorzellenstruktur des räumlichen Lichtmodulators SLM.

Der räumliche Lichtmodulator SLM kann unabhängig von seiner Auflösung mit Modulatorzellen im Interesse einer hohen Leuchtdichte der rekonstruierten Objektlichtpunkte mit einer möglichst großen Anzahl von Beleuchtungseinheiten beleuchtet werden.

Die Abbildungselemente des Fokussiermittelfeldes sind in der vorliegenden Ausführung Mikrolinsen in einem Mikrolinsenarray, welche die ihnen zugeordnete Lichtquelle, in einer Fokalebene an einer Augenposition EP abbilden. Die Positionen der interferenzfähigen Lichtquellen sind in Bezug zur zugeordneten Mikrolinse so eingestellt, dass die interferenzfähigen Lichtquellen welche die Lichtquellen LQ1, LQ2 und LQ3 an der Augenposition EP koinzidieren. Die Abbildungselemente können aber jede Art von fokussierenden optischen Elementen sein, die zu einem Feld angeordnet sind und eine Sammellinsenfunktion ausführen. Insbesondere können die Abbildungselemente auch holographische optische Elemente sein.

Ein nicht gezeigter Hologrammprozessor der Systemsteuerung kodiert den räumlichen Lichtmodulator SLM mit einer Folge von Videohologrammen, so dass sich zur Augenposition modulierte Lichtwellen ausbreiten und ein einzelner oder mehrere Betrachter können die räumlich rekonstruierte Szene an der Augenposition in einem Sichtbarkeitsbereich beobachten.

Prinzipiell ist zum Unterstützen von Koinzidenz auch die Verwendung einer Feldlinse möglich. In der einfachen Ausführung wird aber darauf verzichtet und die Position der Lichtquellen ist so zu den Linsen verschoben, dass die Abbildungselemente des Fokussiermittelfeldes LA die Lichtquellen LQ1 ... LQ3 an der Augenposition EP in einen gemeinsamen Fokuspunkt abbilden.

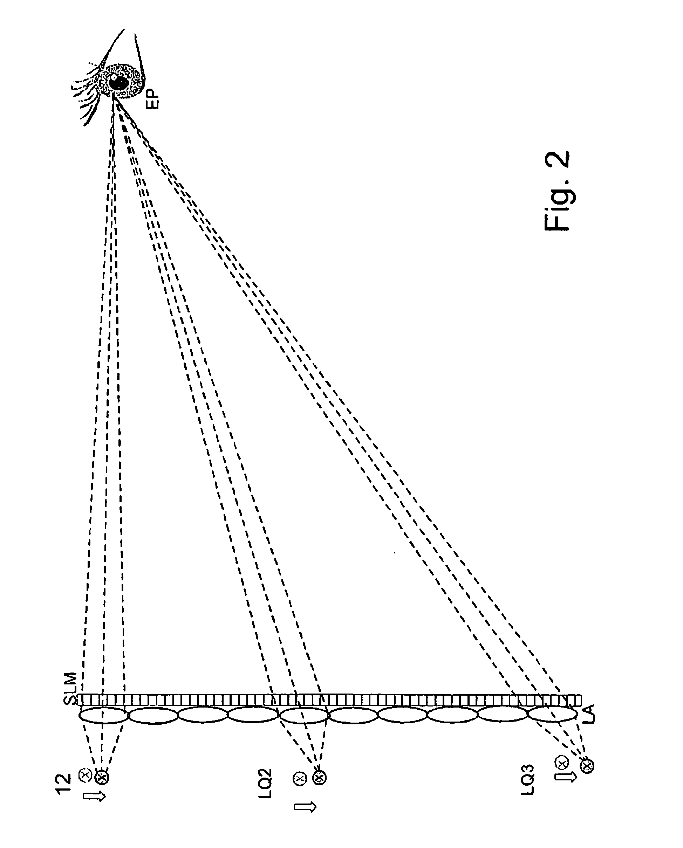

FIG. 2 zeigt eine Möglichkeit zum Nachführen der modulierten Teillichtwellen auf die aktuelle Augenposition ohne die Mittel gemäß der Erfindung. Dabei wird die Position der einzelnen Lichtquellen LQ1, LQ2 und LQ3 mechanisch so verschoben, dass die Abbildungselemente des Fokussiermittelfeldes LA die Lichtquellen auf eine geänderte Betrachterposition EP abbilden.

Wenn die Abbildungselemente Linsen sind, dann können in der Regel die Abbildungseigenschaften nur für eine Position der Lichtquelle relativ zu den Mikrolinsen optimiert werden. Bei einer Änderung des Winkels zwischen Lichtquelle und Mittelpunkt der Mikrolinse entstehen Aberrationen, die die Rekonstruktion des Hologramms nachteilig beeinflussen.

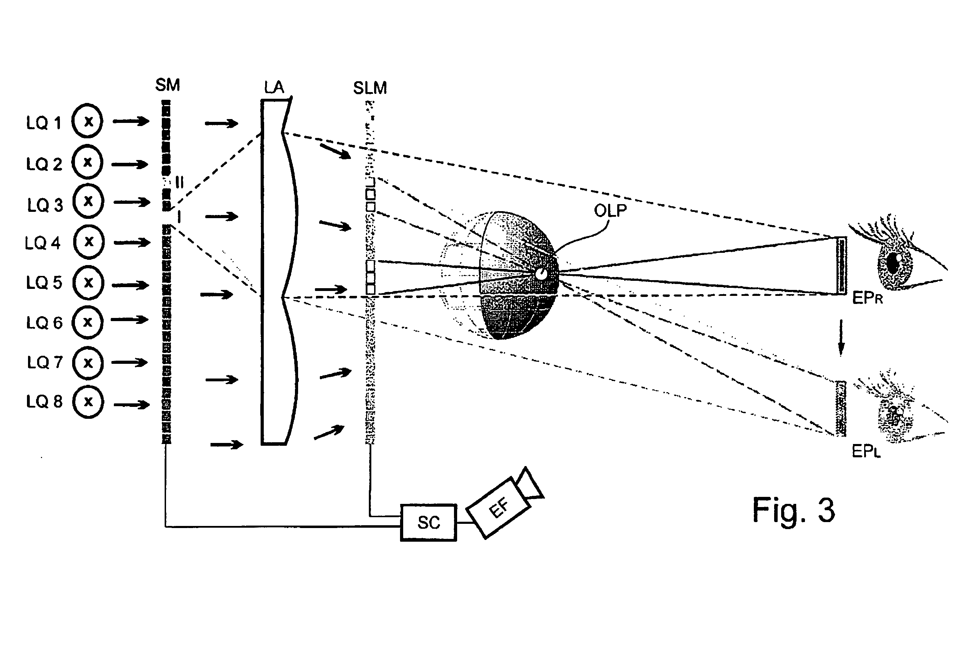

Figur 3 zeigt ebenfalls ein Beispiel zum Nachführen der modulierten Lichtwellen auf die aktuelle Augenposition ohne die Mittel der Erfindung. Im Gegensatz zu Beispiel in Fig. 2 enthält FIG. 3 ein Lichtquellenfeld mit einer wesentlich größeren Anzahl von Lichtquellen, die eine flächenförmige Hintergrund-Beleuchtung bilden und die oben erwähnte zusätzliche schaltbare Modulatormatrix SM mit lichtdurchlässig schaltbaren Modulatorzellen, ein so genanntes LCD-Shutter Array. Die Modulatormatrix SM öffnet abhängig von der aktuellen Augenposition, die ein Augenfinder EF ermittelt, für jedes Abbildungselement des Fokussiermittelfeldes LA einen punktförmigen Lichtaustritt I oder II für das interferenzfähige Licht, welches die Abbildungselemente zur rechten Augenposition EP_{R} oder zur linken Augenposition EP_{L} fokussieren. Dabei entsteht auf der Modulatormatrix SM ein Muster von lichtdurchlässig geschalteten Modulatorzellen. Die Systemsteuerung SC öffnet für jedes Abbildungselement des Fokussiermittelfeldes LA nur einen der aktuellen Augenposition entsprechenden Lichtaustritt I oder II und für jeden Objektlichtpunkt kodiert der Hologrammprozessor nur einen Teilbereich der Modulatorzellenstruktur.

Damit wird gesichert, dass in der benutzten Beugungsordnung nur zur aktuellen Augenposition EP_{R} moduliertes Licht von der Öffnung I zum Rekonstruieren des als Beispiel einzeln dargestellten Objektlichtpunkt OLP gelangt. Die Augenposition EP_{L} wird anschließend nach dem Umkodieren des räumlichen Lichtmodulators und dem Umschalten auf Öffnung **II** mit einer Rekonstruktion versorgt.

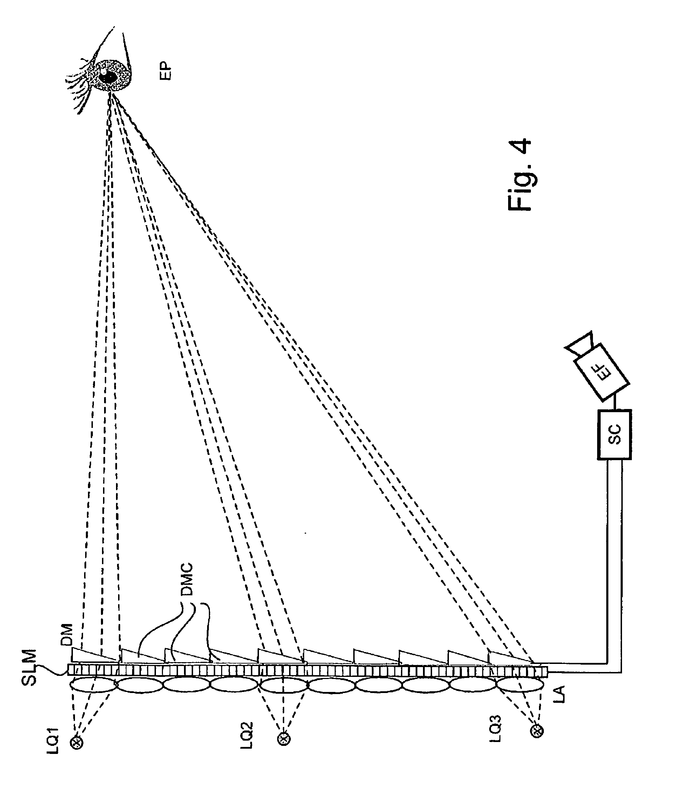

FIG. 4 zeigt ein Rekonstruktionssystem mit einer Wellennachführung mit Mitteln gemäß der Erfindung In diesem Ausführungsbeispiel liegt auf dem Lichtmodulator SLM ein steuerbares elektro-optische Ablenkmittelfeld DM in Form eines Mikroprismenarrays mit in ihrer Lichtaustrittsrichtung einstellbare optische Zellen DMC, beispielsweise in der Ausführung eines Feldes mit bekannten Elektro-Benetzungszellen, bei dem durch Elektrofelder einstellbare Prismen die modulierten Lichtwellen auf die Augenposition führen.

Bei diesem beschriebenen System ist der Lichtweg zwischen jeder Lichtquelle LQ, dem zugeordneten Fokussierelement und dem Durchgang auf dem Lichtmodulator unabhängig von der Augenposition immer der gleiche. Allerdings ist der Lichtweg für jedes Abbildungselement des Fokussiermittelfeldes LA anders, so dass jede Linse individuell optimiert werden muss. Dies lässt sich insbesondere vorteilhaft ausführen, wenn anstelle eines refraktiven Mikrolinsenarrays ein holografisch optisches Element verwendet wird.

In diesem Fall haben die von der Systemsteuerung SC in den einstellbaren optischen Zellen DMC eingestellten Prismen des Ablenkmittelfeld DM zum Nachführen der Teillichtwellen alle den gleichen Winkel. Dies würde eine einfache Ansteuerung eines Prismenarrays über wenige Parameter erlauben.

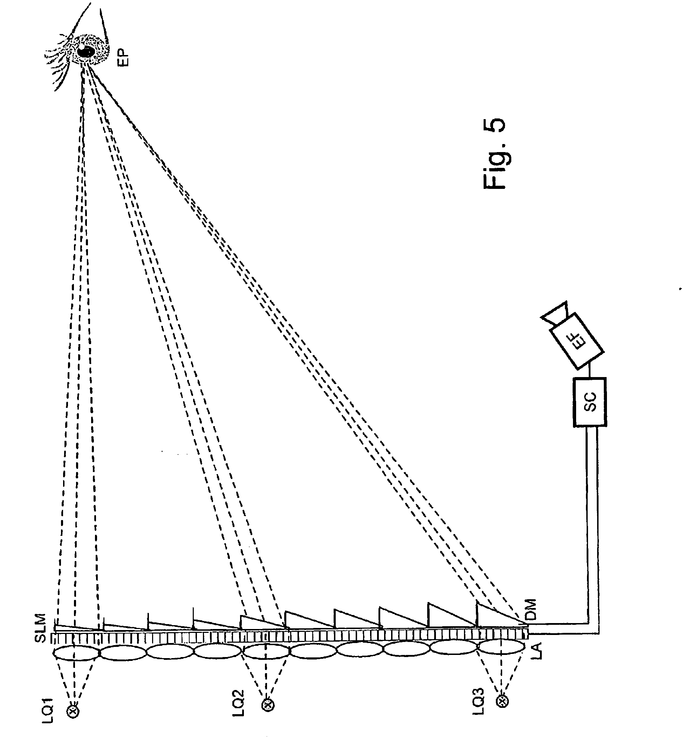

Figur 5 zeigt eine andere Realisierung der Nachführung der modulierten Teilwellenfelder auf die Betrachteraugen gemäß der Erfindung.

Hier werden alle die Abbildungselemente des Fokussiermittelfeldes LA mit der gleichen relativen Position der Lichtquelle zur Mitte des Abbildungselementes beleuchtet. Es kann eine Matrixanordnung mit identischen Abbildungselementen verwendet werden. Stattdessen kann jedes Prisma des Ablenkmittelfeldes DM unter einem individuellen Winkel eingestellt werden. In diesem Fall ist die Funktion einer Feldlinse im Ablenkmittelfeld DM integriert.

Dies würde jedoch eine individuelle Ansteuerung jeder einstellbaren optischen Zelle DMC im Ablenkmittelfeld DM erfordern.

Als eine weitere Ausführungsform kann auch ein Ablenkmittelfeld verwendet werden, die aus einer Kombination von festen und variablen Prismentermen besteht. Dabei kann insbesondere der feste Prismenterm die Funktion einer Feldlinse übernehmen, also für eine mittlere Augenposition das Licht aller Abbildungselemente in Richtung des Betrachters lenken, während der variable Prismenterm dann für eine rein laterale Nachführung in einem mittleren Augenabstand für alle Prismen gleich wäre und für eine axiale Nachführung zwar unterschiedlich, sich aber weniger stark unterscheidet als in dem in Abbildung 4 gezeigten Fall.

Bei Kombination eines Ablenkmittelfeld DM mit einem Fokussiermittelfeldes LA kann, muss aber nicht, wie in den beispielhaften Abbildungen gezeigt, in einer Dimension je ein Abbildungselemente des Fokussiermittelfeldes LA einem Prisma des Ablenkmittelfeldes DM zugeordnet sein.

Es sind auch Kombinationen denkbar bei denen zum Beispiel jede Linse des Linsenarrays mehreren kleineren Prismen zugeordnet ist oder in denen Linsen und Prismen gar keine feste Zuordnung zueinander haben.

In einer weiteren Ausführung sind die Ablenkmittel ein Feld von Flüssigprismen mit nach dem Prinzip von Elektro-Benetzungszellen, welche in einem Ausführungsbeispiel jeweils einen Hohlkörper enthalten, welcher mit einer optisch transparenten Flüssigkeit gefüllt ist. Die Oberfläche der Flüssigkeit weist zu den Wänden des Hohlkörpers so genannte Kontaktwinkel auf. Die Kontaktwinkel der Flüssigkeit im Hohlkörper sind für gegebene, nicht zeitlich veränderliche Geometrien, Materialien und Bedingungen konstant und können mittels der Young-Gleichung angegeben werden. Durch Anlegen eines elektrischen Feldes z.B. im Dielektrikum zwischen Flüssigkeit und einer der Wände des Hohlkörpers oder zwischen zwei gegenüberliegenden Seitenwänden des Hohlkörpers erfolgt eine Veränderung der Gleichgewichtsbedingungen und die Kontaktwinkel der Flüssigkeit zu den Seitenwänden des Hohlkörpers verändern sich. Dieser so genannte Elektrobenetzungseffekt kann mittels der so genannten Lippmann-Gleichung beschrieben werden. Durch Variation eines oder mehrerer elektrischer Felder werden die Kontaktwinkel und damit die Grenzflächenform der Flüssigkeit verändert, wodurch die Ablenkung des transmittierten Lichtstrahls gemäß den Gesetzen der refraktiven Optik variiert wird.

Es kann sich beispielsweise um einen zylindrischen Hohlkörper mit rechteckiger Grundfläche handeln, dessen gegenüberliegende Seitenwände jeweils paarweise die Elektroden eines Kondensators darstellen. Zwischen Elektroden und elektrisch geerdeter Flüssigkeit sind elektrisch isolierende Schichten aufgebracht, die vorteilhaft hydrophile Eigenschaften aufweisen. Bei ausgeschalteten Kondensatoren stellt sich eine nahezu sphärische Grenzfläche der Flüssigkeit ein, wodurch nur lokal begrenzte Lichtstrahlen gemäß der lokalen Krümmung der Grenzfläche abgelenkt werden können.

Die Realisierung einer Prismenfunktion für eine ausgedehnte Lichtwelle erfordert einen konstanten Prismenwinkel des Flüssigprismas über dem gesamten Durchmesser des Lichtbündels. Um dies zu erreichen, werden die Kontaktwinkel an den gegenüberliegenden Elektroden unabhängig voneinander eingestellt, indem die gegenüberliegenden Elektroden mit entsprechenden Spannungen angesteuert werden. Beispielsweise können Spannungen angelegt werden, so dass gegenüberliegende Kontaktwinkel jeweils gleich 90° sind. In diesem Fall liegt keine Prismenwirkung vor, das Flüssigprisma wirkt wie eine planparallele Platte. Ebenso gibt es Spannungspaare, um gegenüberliegende Kontaktwinkel zu erzeugen, die im Betrag ungleich sind, deren Summe jedoch gleich 180° ist. In diesem Fall wirkt das Element als Prisma. Die Elektroden sind vorzugsweise paarweise schaltbar, so dass sowohl Ablenkungen in x- als auch in y-Richtung möglich sind und dadurch der Sichtbarkeitsbereich dem Betrachter in diesen Richtungen nachführbar ist.

In einem alternativen Ausführungsbeispiel kann ein Electrowetting-Flüssigprisma auch mehrere nicht mischbare, optisch transparente Flüssigkeiten in einem Hohlkörper aufweisen. An der Grenzfläche zwischen den Flüssigkeiten liegt ein Brechungsindexunterschied vor, wodurch eine Ablenkung des transmittierten Lichts erfolgt. Ein Vorteil in der Verwendung mehrerer, insbesondere zweier, Flüssigkeiten liegt darin, dass auf diese Weise eine Kapselung der Liquide möglich ist. D.h., der Hohlkörper ist vollständig geschlossen und völlig durch die Liquide ausgefüllt. Außerdem können bei einer Dichteanpassung der Flüssigkeiten Gravitätsprobleme vermieden werden. D.h., wenn beide Flüssigkeiten etwa die gleiche Dichte haben, verändert sich bei einer Lageänderung des Prismas, Schock oder Vibrationen etc., ihre Anordnung in dem Hohlkörper aufgrund von Gravitationskräften nicht oder nur unwesentlich. Auch kann die Grundfläche des Hohlkörpers eine andere sein, z.B. auch ein Sechs- oder Achteck. Ferner ist denkbar, dass solche Flüssigprismen sozusagen in Reihe geschaltet werden, also in Ausbreitungsrichtung des Lichts hintereinander angeordnet sind.

Mit den Mitteln gemäß der Erfindung kann die Lage des Sichtbarkeitsbereichs entsprechend der aktuellen Augenposition angepasst werden. Die Kodierung des Lichtmodulators wird dabei derart geändert, dass diese in Abhängigkeit von der Position des aktuellen Betrachterauges horizontal und/oder vertikal verschoben und/oder im Winkel gedreht sichtbar wird. Insbesondere sind Rekonstruktionen möglich, die vor dem Betrachter fest im Raum stehen und sowohl eine wirklichkeitsnahe Anpassung der Betrachterperspektive bei Bewegungen eines Betrachters als auch Rekonstruktionen mit übertriebener Änderung der Betrachterperspektive ermöglichen. Unter letzterem wird verstanden, dass die Winkel- und Positionsänderung des Szenegrößer ist, als die Winkel- und Positionsänderung des Betrachters.

Vorteilhaft lassen sich die Phasenfehler durch die Bildfeldkrümmung in einem Rekonstruktionssystem durch den Lichtmodulator SLM kompensieren. Diese Phasenfehler lassen sich durch einen zusätzlichen Phasenhub korrigieren. Ebenso können Koma und Astigmatismus durch Kodierung reduziert werden. Die Verzeichnung kann beispielsweise durch Wahl der Pixel des Lichtmodulators kompensiert werden, indem die Holograrnm-Werte auf den unter Berücksichtigung der Verzeichnung ermittelten Modulatorzellenpositionen kodiert werden. Auf ähnliche Weise werden auch die Aberrationen des gesamten Projektionssystems mittels Korrekturkalkulation im Lichtmodulator kompensiert. Durch Korrektur der Kodierung des Lichtmodulators können grundsätzlich alle Aberrationen von Abbildungsmitteln reduziert oder kompensiert werden.

Das Rekonstruktionssystem gemäß der Erfindung ermöglicht mit räumlichen Lichtmodulatoren mit geringer Ausdehnung für eine holographische Rekonstruktion wechselnde Positionen von Betrachteraugen und Betrachtung großer dreidimensionaler Szenen einfach zu realisieren. Da in großen Teilen des Projektionssystems ein statischer, von Bewegungen der Betrachteraugen unabhängige Ausbreitungsrichtung für das modulierte Wellenfeld existiert, können bekannte Korrekturmaßnahmen von optischen Fehlern günstig und optimal durch optisches Design und durch Kodieren der Videohologramme auf dem räumlichen Lichtmodulator vorgenommen werden. Es können zwei- und dreidimensionale Szenen gleichzeitig oder nacheinander dargestellt werden. Außerdem stellt das Rekonstruktionssystem relativ geringe Anforderungen an Herstellungsgenauigkeit und Aberrationen der optischen Komponenten. Optische Fehler lassen sich kostengünstig mit Software den Lichtmodulator korrigieren und benötigen zweitens nur eine kleine Wellenfrontverzerrung über einen kleinen Bereich des großen Abbildungsmittels.

In der festen Anordnung der Lichtquellen relativ zum Fokussiermittelfeld LA wird nur eine Lichtquelle je die Abbildungselement benötigt.

Prinzipiell ist auch die Nutzung von Sekundärlichtquellen so möglich, dass das Licht einer oder mehrerer Lichtquellen zunächst auf einen gemeinsamen Fokus fokussiert und dieser Fokus dann als Sekundärlichtquelle zur Beleuchtung der Linse dient. Hiermit kann vorteilhaft die Intensität der Beleuchtung erhöht werden.

Die feste Führung des Wellenfeldes erleichtert vorteilhaft zusätzlich das Verwenden von Raumfiltem zum Unterdrücken höherer Beugungsordnungen des Lichtmodulators.

Die vorliegende Lösung zum Nachführen eines Sichtbarkeitsbereichs entsprechend wechselnden Augenpositionen erlaubt, ein holographisches Display mit einem in weiten Teilen statischen, von Bewegungen der Betrachteraugen unabhängigen Wellenausbreitung. Damit können bekannte Korrekturmaßnahmen von optischen Fehlern günstig und optimal durch optisches Design und durch Kodieren der Hologramme auf dem räumlichen Lichtmodulator vorgenommen werden.

## Patentansprüche

1. Holographisches Rekonstruktionssystem mit einem optischen Systemausgang für ein moduliertes Wellenfeld, umfassend:
(a) Lichtquellen (LQ1 ... LQ4) zur Erzeugung interferenzfähiger Lichtwellen,
(b) optische Fokussiermittel (LA), zum Abbilden der Lichtquellen (LQ1 ... LQ4) mit interferenzfähigen Lichtwellen in einen Sichtbarkeitsbereich vor einer Augenposition (EP),
(c) räumliche Lichtmodulationsmittel (SLM), welche Modulatorzellen aufweisen, um das Wellenfeld mit Videohologrammen zu modulieren und um Objektlichtpunkte (OPL) einer Szene durch Interferenz des modulierten Wellenfelds holographisch zu rekonstruieren,
(d) eine Systemsteuerung (SC) mit einem Hologrammprozessor zum Neuberechnen der Videohologramme und einem Augenfinder (EF), welche die Lichtwellen jeweils auf mindestens eine aktuelle Augenposition ausrichtet und bei Positionswechsel der Augenposition nachführt,
wobei die optischen Fokussiermittel (LA) ein Fokussiermittelfeld mit einer Vielzahl von Fokussierelementen enthält und jeder Lichtquelle (LQ1 ... LQ4) mindestens ein Fokussierelement zugeordnet ist, so dass ein Bündel von Beleuchtungseinheiten entsteht, die gemeinsam die Lichtmodulationsmittel (SLM) beleuchten, **dadurch gekennzeichnet,**
**dass** das Rekonstruktionssystem außerdem elektro-optische Ablenkmittel (DM) enthält, welche am Systemausgang liegen und wenigstens ein Ablenkmittelfeld mit in ihrer Lichtaustrittsrichtung einstellbare optische Zellen (DMC) aufweisen, so dass jeder Lichtquelle (LQ1 ... LQ4) und jedem Fokussierelement mindestens eine einstellbare optische Zelle (DM) zugeordnet ist,
**dass** die Systemsteuerung (SC) derart ausgelegt ist, dass die elektro-optischen Ablenkmittel (DM) mit vom Augenfinder (EF) ermittelten Positionssignalen auf eine durch den Inhalt des aktuellen Videohologramms bestimmte aktuelle Augenposition einstellbar sind, um die fokussierten, modulierten interferenzfähigen Lichtwellen auf mindestens eine Augenposition (EP) auszurichten und
**dass** der Hologrammprozessor derart ausgelegt ist, dass über die Einstellungen der Modulatorzellen der Lichtmodulationsmittel die Phasenstruktur des abgelenkten propagierenden modulierten Lichtwellenfeldes einstellbar ist, um die Rekonstruktion der Szene durch Interferenz des modulierten Wellenfelds zu ermöglichen.

2. Holographisches Rekonstruktionssystem nach Anspruch 1, bei dem die einstellbaren optischen Zellen des Ablenkmittelfeldes die gleiche Matrixstruktur aufweisen, wie die Struktur des Fokussiermittelfeldes und das Lichtquellenfeld.

3. Holographisches Rekonstruktionssystem nach Anspruch 1, bei dem die Systemsteuerung mit den einstellbaren optischen Zellen des Ablenkmittelfeldes eine steuerbare optische Prismenfunktion realisiert, um das modulierte und fokussierte und auf eine achsennahe Basisposition gerichtete Lichtwellenfeld vor dem Rekonstruieren der Szene lateral auf die aktuelle Augenposition auszurichten.

4. Holographisches Rekonstruktionssystem nach Anspruch 1, bei dem die Systemsteuerung mit den einstellbaren optischen Zellen der Ablenkmittel sowohl eine steuerbare optische Prismenfunktion als auch eine Linsenfunktion realisiert, um die Fokalebene axial an die aktuelle Augenposition anzupassen.

5. Holographisches Rekonstruktionssystem nach Anspruch 4, bei dem die Ablenkmittel mindestens zwei Feldebenen mit einstellbaren optischen Zellen enthalten, um in einer Feldebene Linsenfunktionen und in der anderen Ebene Prismenfunktionen zu realisieren.

6. Holographisches Rekonstruktionssystem nach Anspruch 1, bei dem die Systemsteuerung die einstellbaren optischen Zellen im selben Feld von Ablenkelementen auf verschiedene Prismenwinkel einstellt, um für die Lichtwellen von den Ablenkelementen der Ablenkmittel vor der aktuellen Augenposition Koinzidenz zu realisierten.

7. Holographisches Rekonstruktionssystem nach Anspruch 1, für ein System mit sequenzieller Kodierung von Videohologrammen für beide Augen von Betrachtem, bei dem die Systemsteuerung synchron zum aktuell kodierten Videohologramm die Ablenkmittel periodisch auf verschiedene Augenpositionen umschaltet.

8. Holographisches Rekonstruktionssystem nach Anspruch 7, bei dem die optischen Ablenkmittel mechanisch verbundene, steuerbare optische Elemente enthalten.

9. Holographisches Rekonstruktionssystem nach Anspruch 7, bei dem der Augenfinder für ein axiales Nachführen die Brennweite der einstellbaren optischen Zellen steuert und zum lateralen Nachführen der Lichtwellen die Prismenfunktion entsprechend der aktuellen Augenposition steuert.

10. Holographisches Rekonstruktionssystem nach Anspruch 1, bei dem im Lichtweg wenigstens zwei Ablenkmittelfelder liegen, wobei die Ablenkwinkel der Ablenkelemente beider Feldebenen um 90 Grad zueinander gedreht sind, um eine zweidimensionale, laterale Wellenachführung zu realisieren.

11. Holographisches Rekonstruktionssystem nach Anspruch 1, bei dem die Ablenkelemente Elektro-Benetzungszellen sind.

12. Holographisches Rekonstruktionssystem nach Anspruch 11, für eine farbige Rekonstruktion mit sequentiellen monochromatischen Videohologrammen in den Videogrundfarben, bei dem die Elektrobenetzungszellen in zwei Lagen angeordnet sind, um bei farbigen Rekonstruktionen mit sequentiellen Videohologrammen zwischen den Videohologrammen durch Ändern des Ablenkwinkels die Farbdispersion zu kompensieren.

13. Holographisches Rekonstruktionssystem nach Anspruch 12, für eine farbige Rekonstruktion mit farbigen Videohologrammen, bei dem die zwei Elektrobenetzungszellen im Lichtweg in Serie angeordnet sind und Medien mit verschiedenem Brechungsindex aufweisen, um achromatische optische Ablenkelemente zu realisieren.

14. Holographisches Rekonstruktionssystem nach Anspruch 1, bei dem die optischen Ablenkelemente verbundene optische Elemente aufweisen, die eine feste Prismenkomponente und eine steuerbare Prismenkomponente vereinen, um für die steuerbare Prismenkomponente kleinere Ablenkwinkel und somit geringere Ansteuerspannungen zu benötigen.

## Claims

1. Holographic reconstruction system with an optical system exit for a modulated wave field, comprising:
(a) light sources (LQ1...LQ4) for generating light waves being capable of generating interference,
(b) optical focussing means (LA) for imaging the light sources (LQ1...LQ4) with light waves which are capable of generating interference into a visibility region which lies in front of an eye position (EP),
(c) spatial light modulator means (SLM), which comprise modulator cells for modulating the wave field with video holograms and for holographically reconstructing object light points (OLP) of a scene by way of interference of the modulated wave field,
(d) a system controller (SC) with a hologram processor for re-computing the video holograms and with an eye finder (EF), said system controller directing the light waves at at least one current eye position accordingly and tracking the light waves when the eye position changes,
where the optical focussing means (LA) comprise an array of focussing means with a plurality of focussing elements, and where at least one focussing element is assigned to each light source (LQ1...LQ4), thus forming a bundle of illumination units which jointly illuminate the light modulator means (SLM), **characterised in**
- **that** the reconstruction system further comprises electro-optical deflection means (DM) being located at the system exit and comprising at least one array of deflection means with controllable optical cells (DMC) being controllable at the light exit direction, so that at least one controllable optical cell (DMC) is assigned to each light source and each focussing element,
- **that** the system controller (SC) is adapted such that the electro-optical deflection means (DM) is controlled based on position signals of a current eye position being detected by the eye finder (EF) and being determined by the content of the current video hologram, for directing the focussed, modulated light waves which are capable of generating interference at at least one eye position (EP), and
- **that** the hologram processor is adapted such that the phase structure of the deflected propagating modulated wave field is controllable by way of the settings of the modulator cells of the light modulator means for providing the reconstruction of the scene through interference of the modulated wave field.

2. Holographic reconstruction system according to claim 1 where the controllable optical cells of the array of deflection means have the same matrix structure as the structure of the array of focussing means and the array of light sources.

3. Holographic reconstruction system according to claim 1, where the system controller realises with the help of the controllable optical cells of the array of deflection means a controllable optical prism function in order to laterally direct the modulated and focussed light wave field, which is directed at a near-axis basic position, at the current eye position before the scene is reconstructed.

4. Holographic reconstruction system according to claim 1, where the system controller realises with the help of the controllable optical cells of the deflection means both a controllable optical prism function and a lens function in order to adapt the focal plane axially to the current eye position.

5. Holographic reconstruction system according to claim 4, where the deflection means comprise at least two array planes with controllable optical cells in order to realise lens functions in one array plane and prism functions in the other plane.

6. Holographic reconstruction system according to claim 1, where the system controller controls the controllable optical cells in the same array of deflection elements such that they realise different prism angles in order to realise coincidence of the light waves coming from the deflection elements of the deflection means in front of the current eye position.

7. Holographic reconstruction system according to claim 1 for a system with sequential encoding of video holograms for both eyes of observers, where the system controller periodically switches the deflection means to serve different eye positions in synchronism with the currently encoded video hologram.

8. Holographic reconstruction system according to claim 7, where the optical deflection means comprise mechanically connected controllable optical elements.

9. Holographic reconstruction system according to claim 7, where the eye finder controls the focal length of the controllable optical cells for an axial tracking, and the prism function according to the current eye position for lateral tracking of the light waves.

10. Holographic reconstruction system according to claim 1, where at least two array of deflection means lie in the optical path, where the deflection angles of the deflection elements of the two array planes are disposed at an angle of 90° to each other in order to realise a two-dimensional, lateral wave tracking.

11. Holographic reconstruction system according to claim 1, where the deflection elements are electrowetting cells.

12. Holographic reconstruction system according to claim 11 for a colour reconstruction with sequential monochromatic video holograms in the primary colours of video representations, where the electrowetting cells are disposed in two planes in order to compensate colour dispersion among the video holograms by changing the deflection angle for colour reconstructions with sequential video holograms.

13. Holographic reconstruction system according to claim 12 for a colour reconstruction with coloured video holograms, where the two electrowetting cells in the optical path are arranged in series and comprise materials with a different refractive index, so to realise achromatic optical deflection elements.

14. Holographic reconstruction system according to claim 1, where the optical deflection elements comprise combined optical elements which combine a fix prism component and a controllable prism component, so that the controllable prism component only needs to realise smaller deflection angles and thus only requires lower control voltages.

## Revendications

1. Système de reconstruction holographique avec une sortie de système optique pour un champ d'ondes modulé, comprenant .
a) des sources de lumière (LQ1 ... LQ4) pour générer des ondes lumineuses capables d'interférence,
b) des moyens de focalisation optique (LA) pour reproduire les sources de lumière (LQ1 ... LQ4) avec des ondes lumineuses capables d'interférence dans une zone de visibilité devant une position oculaire (EP),
c) des moyens de modulation de lumière spatiale (SLM) présentant des cellules de modulateur pour moduler le champ d'ondes avec des hologrammes vidéo et reconstruire de façon holographique des points de lumière d'objet (OPL) d'une scène par une interférence du champ d'ondes modulé,
d) une commande de système (SC) avec un processeur d'hologramme pour recalculer les hologrammes vidéo et un viseur oculaire (EF), ladite commande alignant les ondes lumineuses respectivement sur au moins une position oculaire actuelle et les asservit en cas de changement de position de la position oculaire,
dans lequel les moyens de focalisation optique (LA) comprennent un champ de moyens de focalisation avec une pluralité d'éléments de focalisation, et au moins un élément de focalisation est attribué à chaque source de lumière (LQ1 ... LQ4), de façon à créer un faisceau d'unités d'éclairage qui éclairent ensemble les moyens de modulation de lumière (SLM), **caractérisé en ce que**
le système de reconstruction comprend en outre des moyens de déviation électro-optique (DM) situés à la sortie du système et présentent au moins un champ de moyens de déviation avec des cellules optiques (DMC) réglables au niveau de leur direction de sortie de lumière, de sorte qu'au moins une cellule optique (DM) réglable est attribuée à chaque source de lumière (LQ1 ... LQ4) et à chaque élément de focalisation,
la commande de système (SC) est conçue de telle sorte que les moyens de déviation électro-optiques (DM) sont réglables, à l'aide de signaux de position déterminés par le viseur oculaire (EF), sur une position oculaire actuelle, déterminée par le contenu de l'hologramme vidéo actuel afin d'aligner les ondes lumineuses capables d'interférence, modulées et focalisées, sur au moins une position oculaire (EP), et
le processeur d'hologramme est conçu de telle sorte que les réglages des cellules de modulateur des moyens de modulation de lumière permettent de régler la structure de phase du champ d'ondes lumineuses modulé, se propageant, dévié, afin de permettre la reconstruction de la scène par interférence du champ d'ondes modulé.

2. Système de reconstruction holographique selon la revendication 1, dans lequel les cellules optiques réglables du champ de moyens de déviation présentent la même structure matricielle que la structure du champ de moyens de focalisation et du champ de sources de lumière.

3. Système de reconstruction holographique selon la revendication 1, dans lequel la commande de système réalise avec les cellules optiques réglables du champ de moyens de déviation une fonction de prisme optique, pouvant être commandée, afin d'aligner, avant la reconstruction de la scène, le champ d'ondes lumineuses, modulé et focalisé et orienté vers une position de base proche de l'axe, latéralement sur la position oculaire actuelle.

4. Système de reconstruction holographique selon la revendication 1, dans lequel la commande de système réalise avec les cellules optiques réglables des moyens de déviation aussi bien une fonction de prisme optique, pouvant être commandée, qu'une fonction de lentille afin d'adapter le plan focal axialement à la position oculaire actuelle.

5. Système de reconstruction holographique selon la revendication 4, dans lequel les moyens de déviation comprennent au moins deux plans de champ avec des cellules optiques réglables afin de réaliser dans un plan de champ des fonctions de lentille et dans l'autre plan des fonctions de prisme.

6. Système de reconstruction holographique selon la revendication 1, dans lequel la commande de système règle les cellules optiques réglables dans le même champ d'éléments de déviation sur différents angles de prisme afin de réaliser pour les ondes lumineuses provenant des éléments de déviation des moyens de déviation une coïncidence devant la position oculaire actuelle.

7. Système de reconstruction holographique selon la revendication 1, destiné à un système à codage séquentiel d'hologrammes vidéo pour les deux yeux des spectateurs, dans lequel la commande de système commute périodiquement sur différentes positions oculaires en synchronisme avec l'hologramme vidéo en cours de codage.

8. Système de reconstruction holographique selon la revendication 7, dans lequel les moyens de déviation optique comprennent des éléments optiques reliés mécaniquement et pouvant être commandés.

9. Système de reconstruction holographique selon la revendication 7, dans lequel le viseur oculaire commande la distance focale des cellules optiques réglables pour un asservissement axial et commande de façon correspondante la position oculaire actuelle des ondes lumineuses de la fonction de prisme pour l'asservissement latéral.

10. Système de reconstruction holographique selon la revendication 1, dans lequel au moins deux champs de moyens de déviation se trouvent sur le chemin optique, les angles de déviation des éléments de déviation des deux plans de champ étant tournés de 90 degrés l'un par rapport à l'autre afin de réaliser un asservissement d'onde latéral en deux dimensions.

11. Système de reconstruction holographique selon la revendication 1, dans lequel les éléments de déviation sont des cellules d'électromouillage.

12. Système de reconstruction holographique selon la revendication 11, destiné à une reconstruction en couleur avec des hologrammes vidéo monochromatiques séquentiels dans les couleurs primaires vidéo, dans lequel les cellules d'électromouillage sont disposées sur deux couches afin de compenser dans la reconstruction en couleur avec des hologrammes vidéo séquentiels la dispersion de couleur entre les hologrammes vidéo par un changement de l'angle de déviation.

13. Système de reconstruction holographique selon la revendication 12, destiné à une reconstruction en couleur avec des hologrammes vidéo en couleur, dans lequel les deux cellules d'électromouillage sur le chemin optique sont disposées en série et présentent des milieux d'indice de réfraction différent afin de réaliser des éléments de déviation optique achromatiques.

14. Système de reconstruction holographique selon la revendication 1, dans lequel les éléments de déviation optique présentent des éléments optiques reliés réunissant une composante prismatique fixe et une composante prismatique pouvant être commandée afin de nécessiter des angles de déviation plus petits et donc des tensions d'excitation inférieures pour la composante prismatique pouvant être commandée.
